# EUROPEAN PATENT SPECIFICATION

(11) **EP 2 944 145 B1**
(45) Date of publication and mention of the grant of the patent: **08.05.2019**
(21) Application number: 13711040.9
(22) Date of filing: 20.03.2013
(51) Int. Cl.: H04W 72/08, H04W 72/04, H04L 5/00

(54) **METHOD FOR COORDINATED UPLINK RESOURCE ALLOCATION**
VERFAHREN ZUR KOORDINIERTEN UPLINK-RESSOURCENZUWEISUNG
PROCÉDÉ D'ATTRIBUTION DE RESSOURCE DE LIAISON MONTANTE COORDONNÉE

(43) Date of publication of application: 18.11.2015
(73) Proprietor: Huawei Technologies Co., Ltd., Shenzhen, Guangdong 518129 (CN)
(72) Inventor: ZHOU, Guohua, S-16440 Kista (SE); QVARFORDT, Johan Christer, Guangdong 518129 (CN)
(74) Representative: Pfenning, Meinig & Partner mbB
(86) International application number: PCT/EP2013/055830
(87) International publication number: WO 2014/146711

(56) References cited:
- WO-A1-2009/055619
- WO-A1-2011/162395
- QUALCOMM INCORPORATED: "eICIC for a pico eNB with multiple interfering macro eNBs", 3GPP DRAFT; R3-103415, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jacksonville, USA; 20101115, 9 November 2010 (2010-11-09), XP050496732, [retrieved on 2010-11-09]

## Description

### Technical Field

The present invention relates to a method for uplink radio resource allocation in a cellular wireless communication system. Furthermore, the invention also relates to a method in a first control node, a first control node device, a computer program, and a computer program product thereof.

### Background of the Invention

In Heterogeneous Network (HetNet) environment, when more cells and more mobile stations, such as User Equipments (UEs), are part of the network the interference situation in the network becomes more and more complex. Together with the interference imbalance in the uplink (UL) and downlink (DL), and the dramatic interference variation in the uplink, big challenges are brought to the network.

In order to make better use of the radio resources of the small cells (such as micro cells, pico cells, and femto cells), many types of coordination mechanisms have been introduced, such as:
- The frequency domain coordination based Inter-Cell Interference Coordination (ICIC) to help cell edge UEs;
- Time domain coordination based enhanced ICIC (eICIC) to protect the small cell Physical Downlink Control Channel (PDCCH), especially in a Cell Range Expansion (CRE) scenario;
- Inter-layer joint scheduling such as Coordinated Multi-Point (CoMP);
- Carrier aggregation (CA) based ICIC.

However, these mechanisms do not capture the major problem of the HetNet uplink interference. In HetNet it has been found that in the Physical Uplink Shared Channel (PUSCH) small cell UEs will almost never be uplink limited since they are not power limited; the uplink power control can be enough to compensate for the interference. So there is no need to coordinate the radio resources of the macro cells or CoMP from macro layer to help the small cell edge UEs.

Improving the performance for the poor UEs is one of the major objectives of adding the small cells, and another objective is to boost the capacity. The network capacity in uplink is limited by the power limitation of the UEs and by the link efficiency of the individual links. In the HetNet uplink, the interference variation is a major issue which limits the link adaptation efficiency and that cannot be solved by the listed features above.

Compared to the homogeneous macro networks, the main differences of the interference situation in the HetNet network are:
- Higher total uplink Interference over Thermal noise (IoT);
- Higher downlink interference from the perspective of each UE;
- In CRE case, the UEs of the small cells have imbalanced higher interference in the downlink, control channel performance is a problem;
- In CRE case, the interference from the macro cells increase with the CRE bias because the small cell UEs becomes farer away and uses higher power;
- In non CRE case, the small cells have imbalanced higher interference in the uplink;
- Small cell IoT has dramatic variation which depends on the scheduling in the macro cells, the variation is Transmission Time Interval (TTI) level.

Since the UE cell connection is based on downlink signal strength, such as Reference Symbol Received Power (RSRP), for the small cell UE at the small cell border, the downlink RSRP in the small cell is stronger than the RSRP in the neighbouring macro cells, so the interference situation is similar to the UE downlink in homogeneous macro networks.

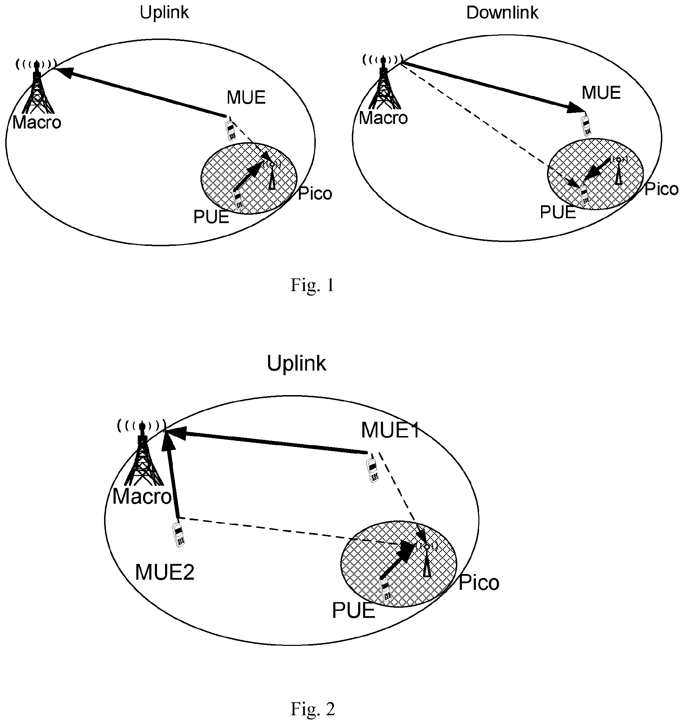

However, in the uplink since the macro (cell) UE can be very close to the small cell due to the downlink transmission power difference between the macro cell and the small cell, the uplink transmission power from the macro UE is much higher than the small cell UE. Thus the uplink interference could be much higher than the uplink signal in the small cell. This situation is illustrated in figure 1, where MUE denotes Macro cell UE, i.e. a UE served/connected to a macro cell and PUE denotes Pico cell UE (i.e. a small cell UE).

As illustrated in figure 2, compared to the heavy interference case when the close to the cell edge interferer MUE1 was scheduled, when the far away macro UE (MUE2) was scheduled, even it may also have high power, the large path loss of the interfering link will make the small cell not heavily interfered.

In this disclosure, the mobile users which are close to the "victim" small cell are denoted as Interference Causing User (ICU). However, the difficulty of the uplink in small cell is not the high interference when those ICUs were scheduled, but the alternating scheduling of ICU and non-ICU (MUE1 and MUE2 in figure 2). The dramatic changing of interference level in the small cell will cause the IoT variation in small cell within TTI level.

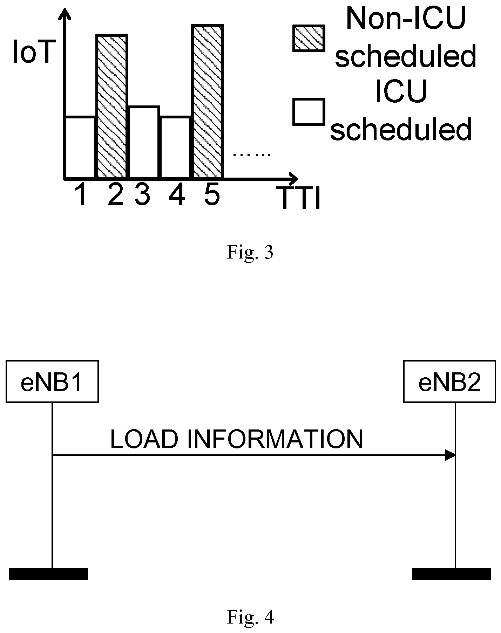

The fast IoT variation in the small cells causes problem to the uplink scheduling. For example, in TTI 6 in figure 3 when the small cell wants to select the Modulation and Coding Scheme (MCS) for the scheduling of this TTI, which channel Signal to Interference and Noise Ratio (SINR) shall the small cell refer to? There are three options in this case:
1. Use the SINR of high interfered TTI, like TTI5 in figure 3. The drawback with this is that since the small cell cannot predict the interference level in TTI6, if the coming TTI has low interference, the chosen MCS is too conservative and will reduce the spectrum efficiency.
2. Use the SINR of low interfered TTI, like TTI4 in figure 3.
   When the small cell selects the SINR of the experienced low interfered TTI, and unfortunately the coming TTI encounters high interference, this transmission is too aggressive and will fail with very high probability. Even the re-transmission after 8 TTI will also probably encounter high interference and re-transmission gain cannot overcome the misestimating of the radio channel.
3. Use the averaged or filtered SINR of the past certain number of TTIs. If the small cell uses the averaged or filtered SINR for the coming scheduling, it will lose efficiency in both conditions of interference level. In the high interference TTI it is too aggressive and in the low interference TTI it is too conservative.

A first prior art solution according to the ICIC study of 3^{rd} Generation Partner Program (3GPP) Release 8 has been presented. A LOAD INFORMATION message for intra-frequency scenario, in which both *UL Interference Overload Indication* IE and *UL High Interference Indication* IE was specified to coordinate peer to peer uplink interference which is illustrated in figure 4. In *UL High Interference Indication* IE the first base station (eNB1) indicates which part of Physical Resource Block (PRB) will probably cause high interference to the second base station (eNB2), and eNB2 can be aware to avoid allocating them to the interference sensitive users.

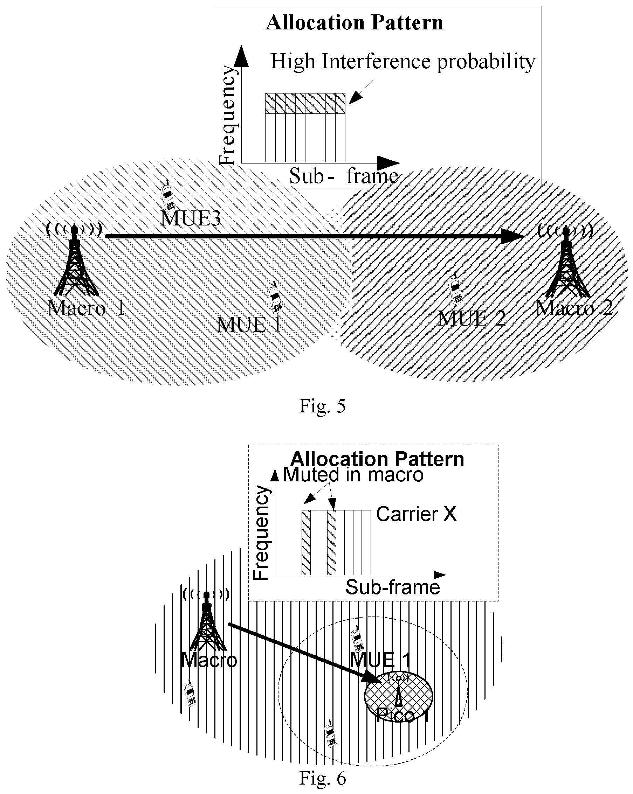

ICIC is an interference coordination manner in the frequency domain, and the main objective of this approach is to improve the poor UE's (cell edge user) performance. The information exchanged also dedicated the interference pattern in frequency domain. And the victim cell can avoid using the high interference probability resource for their interference sensitive users. An example of the interference pattern in ICIC is shown in figure 5, where the base station denoted Macro 1 is sending a message to the base station denoted Macro2 regarding the frequencies that it will schedule the mobile station that are likely to cause high interference, for example MUE1 being on the cell border between the two cells.

However, the ICIC approach is not very useful for the HetNet scenario because:
- There is no poor UE due to the interference caused in the small cell, so there is no need to group the small cell UEs to "cell centre" and "cell edge" and avoid the usage of high probably interfered PRB indicated in HII message by small cell "cell edge" users; and
- Usually the small cell has very limited number of UEs, especially for Home eNB (HeNB). Coordination in the frequency domain will restrict the resource amount available in one scheduling TTI.

A second prior art solution according to the 3GPP Release 10 has further been presented. The eICIC has been developed to coordinate the inter-layer interference from macro cell to small cell, and the initial motivation of this approach was to protect the downlink common channel and control channel in the small cells. This approach is usually used in the CRE case where small cell users were still served by the small cells although the downlink RSRP of it is much lower than the macro neighbour, to make the small cell to attract more traffic. Then the control channel of the small cell could be too bad to use for those small cell UEs in the CRE range. By having the macro muting the transmission in some sub-frames in the time domain, some small cell UEs especially those in the CRE range can still make use of the downlink control channel in those sub-frames. This muting information formed an *ABS Information* IE which was also included in the LOAD INFORMATION message in 3GPP.

As a side effect of this eICIC approach, the uplink interference from macro UEs to the small cells was also muted in the uplink sub-frames corresponding to the downlink Almost Blank Subframe (ABS) sub-frames, because there is no macro UEs to be scheduled in those time slots since the PDCCH is muted. An example of the interference pattern in eICIC is shown in figure 6.

However, the eICIC approach is not very effective for the uplink interference in HetNets as:
- In the non-ABS sub-frames, macro UEs are scheduled. Since different user gives different interference to the small cells, there is still strong interference variation in the small cells.
- In some case, there could be some macro cell centre UEs that are allowed to use the ABS sub-frames with a limited low power. However the uplink power of those UEs is still strong enough to cause interference to the small cells if they are close enough and so large interference variation can still be possible even in the ABS sub-frames.

According to a third prior art solution some ideas on how to coordinate the interference in the CA level were discussed. The main steps are:
- The macro eNB is responsible for detection of the MUEs interfering with the small cell eNB in the uplink. The identification of the interfering MUEs allows for frequency based handling of the source of interference. There are cases when the MUE cannot detect the small cell, but still will be potentially causing high interference in the uplink of the small cell. There are some mechanisms to identify them, such as (1) the MUE sends scheduling history information to the small cell and the small cell analyses it together with the interference it suffered, or the small cell sends the Overload Information (OI) information with the interference situation it suffers to the macro cell, and the macro cell analyse it together with its scheduling history; (2) the MUE sends Sounding Reference Symbols (SRS) and the macro eNB sends the sounding configuration to the small cell which means that the small cell can decode the received MUE SRS, to see which one is nearby and interfering; (3) The macro eNB, in order to be assisted in identifying which of its served MUEs are inducing interference to the small eNB, signals to the small eNB the uplink radio resources allocated to potentially interfering MUEs (in terms of TTI, allocated PRBs, Demodulation Reference Symbols (DMRS) configuration and possibly other parameters like MUE's Timing Advance etc). Once the small eNB detects the MUEs uplink signal, it signals the relevant information (TTI, allocated PRBs, DMRS configuration and interference level) back to the macro eNB, which is then able to identify the interfering MUEs and take appropriate counter-measures for interference mitigation.
- After identification of the interfering MUEs, the solutions imply (re)scheduling of the MUEs to other resources that could reside on the same carrier or on different carriers. A typical example could be that of a MUE interfering on resources used as Secondary Cell (SCell). The macro eNB could either decide to change the SCell carrier for that UE or to de-activate the SCell. By moving the aggressor MUE on different resources (either not shared with the small cell eNB or not interfering with the small cell eNB) it is possible to attenuate the interference to the small cell eNB.
- The small cell eNB could also be responsible for interference management, because the small cell eNB knows which small cell UEs (PUEs) are interfered; the small cell eNB can re-schedule the PUEs and/or use proper power control for PUEs directly.

However in this solution, although the macro eNB has detected the interferers and also restricted the interference in the frequency domain (or carrier domain), the information usage in the small cell is still not very optimized.

WO 2009/055619 A1 discusses a first, femto base station that monitors interference caused by uplink communication of a second, cellular base station, sends an according indication to mobile station served by the second base station that causes the interference, and the mobile station forwards the interference indication to the second base station, which in response assigns the concerned resources to other terminals and assigns non-interference causing resources to the mobile terminal.

WO 2011/162395 A1 discusses a telecommunication control method for a heterogeneous network. Uplink interference created by first user equipment connected to a first-type cell is detected at the second-type cell. The second-type cell reports the interference pattern of the detected interference to the first-type cell. The first-type cell identifies the interfering first user equipment based upon the interference pattern. The first-type cell notifies the second-type cell of the scheduling information of the interfering first user equipment. The second-type cell determines scheduling for second user equipment connected to the second-type cell based upon the scheduling information of the first user equipment.

### Summary of the Invention

An objective of the present invention is to provide a solution which mitigates or solves the drawbacks and/or the problems of prior art solutions.

Another objective is to provide a solution which has improved uplink performance compared to prior art solutions.

According to a first aspect of the invention, the above mentioned objects are achieved by
a method for uplink radio resource allocation in a cellular wireless communication system, said cellular wireless communication system comprising:
a one first cell associated with a first control node and one or more first mobile stations served by said first cell, and
an additional first cell associated with an additional first control node, and
a second cell associated with a second control node and one or more second mobile stations served by said second cell, and
said method comprising the steps of:
   grouping, by said first control node, said first mobile stations into at least two different groups by performing, for each of said first one or more mobile stations, the step of classifying said first mobile station in one of said groups depending on an interference impact of said first mobile station on said second cell, wherein the interference impact is based on one or more parameters comprising: a relation between downlink reception power at said first mobile station from said first cell and downlink reception power from said second cell; an uplink reception power from said first mobile station as measured in said first cell and/or in said second cell; and a spatial position of said first mobile station;
      wherein the method further comprises:
   forming, by said first control node, a first radio resource allocation pattern for said first cell by determining, for each of said groups, a set of one or more radio resources in which the first mobile stations of said group are allowed to transmit in the uplink and in which the first mobile stations of the groups other than said group are not allowed to transmit in the uplink; and
   adapting, by said first control node, said first radio resource allocation pattern by using a radio resource allocation pattern for said additional first cell, said used radio resource allocation pattern being received in a message from said additional first control node, and
   allocating, by said first control node, uplink radio resources of said first cell for said one or more first mobile stations based on said adapted first radio resource allocation pattern for said one or more first mobile stations;
   transmitting, by said first control node, a first message to said first second control node comprising said adapted first radio resource allocation pattern.

Different embodiments of the present invention are defined in the appended dependent claims. Further, any method according to the invention can also be comprised in a computer program and/or a computer program product such that processing means of a device within the first control node executes the mentioned method.

The present invention provides a solution where the uplink performance of a second cell can be enhanced through a reduction of the interference variation from mobile stations in interfering first cells. The present method may use simple thresholds for the decision of mobile stations causing high interference and with reasonable increase in complexity the invention can obtain significant capacity enhancements in the second cells, which are introduced in the network to boost the capacity.

The present invention can be applied in parallel with existing interference coordination techniques, such as ICIC, eICIC and CA-ICIC, to enhance the performance of the uplink independently of the above mentioned existing techniques.

Apart of the capacity enhancement the present invention can also be used to reduce required margins for reliable transmissions of crucial information for the communication link, such as handover signalling and measurement reports, etc. which will enhance the experienced performance of the network for both the operator and the end user.

Further applications and advantages of the invention will be apparent from the following detailed description.

### Brief Description of the Drawings

The appended drawings are intended to clarify and explain different embodiments of the present invention in which:
- Fig. 1 illustrates uplink and downlink interference situation;
- Fig. 2 illustrates uplink low interference situation;
- Fig. 3 illustrates the IoT distribution for a small cell;
- Fig. 4 illustrates Load Information message;
- Fig. 5 illustrates the interference pattern in ICIC approach;
- Fig. 6 illustrates the interference pattern in eICIC approach;
- Fig. 7 illustrates link adaptation based on interference coordination;
- Fig. 8 illustrates the baseline process in the one-to-one case;
- Fig. 9 illustrates the base line process in a macro cell;
- Fig. 10 illustrates the base line process in a small cell;
- Fig. 11 illustrates the process in a one-to-many case;
- Fig. 12 illustrates the process in a many-to-one case;
- Fig. 13 illustrates the small cell IoT distribution over TTI with macro eICIC;
- Fig. 14 illustrates process in the CA case; and
- Fig. 15 illustrates an alternative solution in the frequency domain.

### Detailed Description of the Invention

To achieve the aforementioned and further objects, the present invention relates to a method for uplink radio resource allocation in a cellular wireless communication system, such as 3GPP Long Term Evolution (LTE) or LTE-advanced system. The cellular system comprises at least one first type of cells associated with a first control node and one or more first mobile stations served by the first cell, and the system further comprises at least one second type of cells associated with a second control node and one or more second mobile stations served by said second cell.

Typical control nodes may be base stations, such as eNB in LTE systems, but may be any other control node with the corresponding functions, for example a central control entity, such as a virtual base station pool in a cloud based Radio Access Network (C-RAN). Further, the expression that a mobile station is served by a cell implicates that the mobile station is connected to the network and is reading the control channels of a specific base station covering a specific cell, meaning it is the cell where the mobile station sends and receives its data.

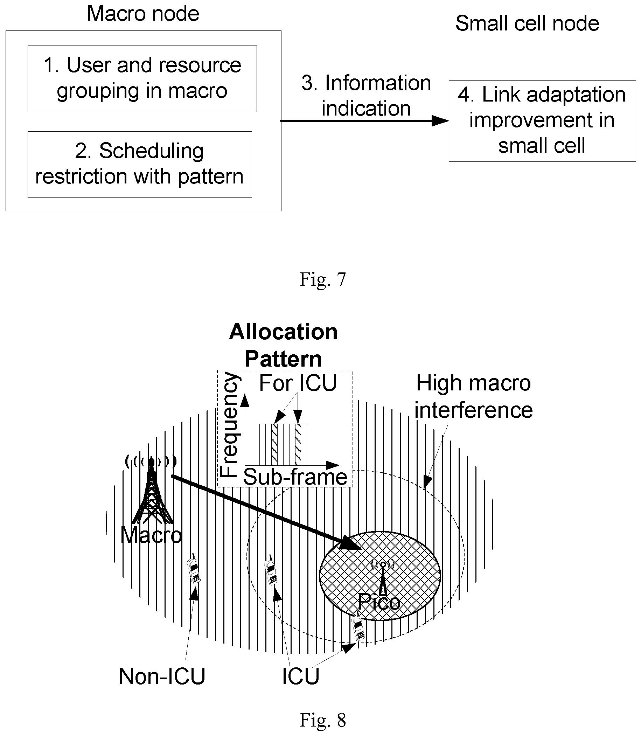

The uplink radio resources of the cellular wireless communication system are frequency/time radio resources, such as Physical Resource Blocks or Resource Elements according to a preferred embodiment of the invention. This further implies that the first radio resource allocation pattern is a time/frequency radio resource pattern, examples of which will be described in the following disclosure. The present method comprises method steps both in the first control node and in the second control node as illustrated in figure 7 which shows the processes in respective first and second nodes and the transmission of information between mentioned nodes. Further, figure 8 illustrates system aspects of the present invention where the first (denoted Macro) cell and the second (denoted Pico) cell are illustrated together with three first mobile stations served by the first cell. A simple dashed line is illustrating the border where the first mobile stations will be considered by the first control node causing high interference in the second cell and the first mobile stations inside this border are denoted ICU and the first mobile station outside the border is denoted non-ICU. The first control node will then allocate the illustrated two out of seven sub-frames for the ICU first mobile stations. An arrow between the first and the second control node is indicating the first message comprising a first radio allocation pattern between the first control node and the second control node.

The steps in the first control node according to the invention are: grouping the one or more first mobile stations into at least two different groups depending on an interference impact of a first mobile station on the second cell; allocating the uplink radio resources of the first cell for the one or more first mobile stations based on the grouping so as to obtain a first radio resource allocation pattern for the one or more first mobile stations; and transmitting a first message comprising the first radio resource allocation pattern.

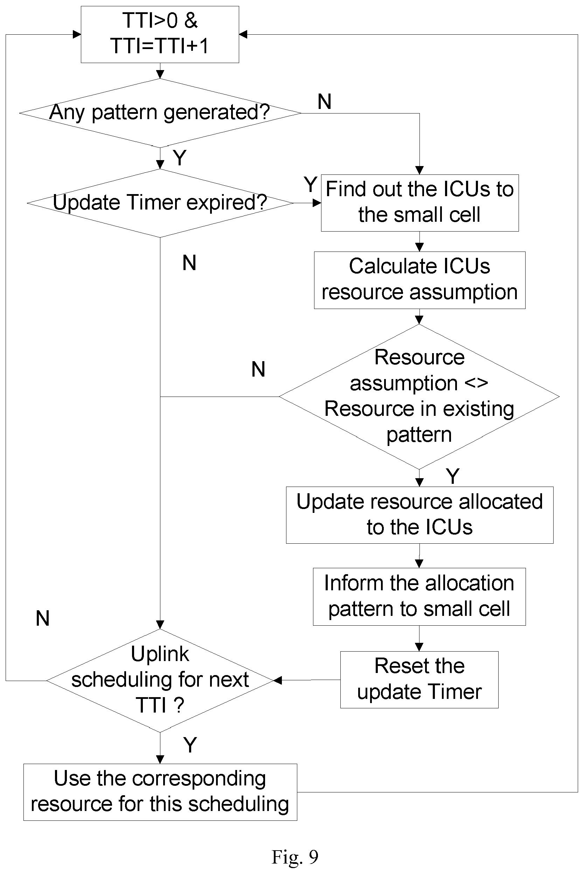

An embodiment of a method in the first control node is illustrated by the flow chart in figure 9, where for each TTI check whether there is first radio resource allocation pattern defined or if an update timer has expired. If there is no defined pattern or the update timer has expired the first control node shall identify the ICUs and then estimate the required amount of resource needed to meet the quality of the ICU connections. If the required amount of resources is supported in an already existing first radio resource allocation pattern or the update timer has not expired the first control node can, if there is any uplink resource to be scheduled, move on to schedule the usage of the uplink resources according to the defined pattern. On the other hand, if there is a difference in the amount of resources required for ICUs and the existing first radio resource allocation pattern the first control node shall update the first radio resource allocation pattern and inform the updated first radio resource allocation pattern to the small cell and reset, if existing, the update timer before scheduling any uplink resource.

To summarize, the method in the first control node includes ICU identifying (identifying the interfering mobile stations of the first type), uplink resource allocation (i.e. pattern forming), and scheduling restriction on the first mobile stations. The resource allocation pattern forming and possible updating could use a middle term semi-static updating procedure, to reflect the traffic variation and the first mobile stations moving in the first cell. To form an uplink resource allocation pattern, the first cell should first find out the ICUs to the second cell, the objective of this step is to group the first mobile stations into two or more groups by the interference level they cause on the second cell. So the main input of the grouping process is the uplink interference of first mobile stations on the second cell.

The approaches to identify the ICUs could include but not limited to one or more of the following parameters:
- A downlink reception power from the first cell to a first mobile station can determine how far away a mobile station is from the first cell site and also the power level used by the mobile station, a downlink reception power from the second cell to a first mobile station can determine the received power level in the opposite direction, or a relation between the downlink reception power from the first cell and the downlink reception power from the second cell can be used in the identification;
- An uplink reception power from a first mobile station measured in the first cell and/or in the second cell, where the signal from the mobile station can be used to determine the interference level it will have on the second cell; and
- A spatial position of a first mobile station, where many different positioning methods can be used, e.g. satellite based methods, such as GPS, Galileo, and Beidou, or radio network based methods, such as OTDOA and Cell-ID based solutions, determining a physical distance to a second cell site.

The grouping of the mobile stations may further be performed with the use of at least one *threshold value* such that the first radio resource allocation pattern comprises at least two groups of uplink radio resources. The first group of uplink radio resources comprises the first mobile stations which have a high interference impact on the uplink in the second cell, and the second group comprises the first mobile stations which have a low interference impact on the uplink in the second cell. To differentiate the mobile stations suitable dB threshold may be used, e.g. related to the ratio of the maximum output transmission power between the first and second cells. Here, some practical examples are given for the grouping process:
- Using the A3 event in LTE, where the trigger for sending a measurement report from the UE is done when the RSRP from a non-serving cell plus an offset is stronger than the RSRP of serving cell, with a very low offset of the second cell to the first cell. Gather those mobile stations close to the second cell boarder. Setting of the neighbouring RSRP offset is related to the relative difference between the output power of the first cell and the second cell and can be subject to changes as the second cells might have to adapt the output power depending on other second cell's coverage;
- Besides the downlink power difference, the ICUs could further be identified with the output power used in the transmission, e.g. a mobile station at one side of the second cell (closer to the site of the first cell) have lower path loss than a mobile station at the other side (away from the site of the first cell) and therefore use lower output power for the same service causing more interference to the second cell;
- The second cell detects the mobile station uplink signal when informed by the first cell of this mobile station's scheduling information, SRS or DMRS configuration, to measure the strength of this mobile station to the small cell.

When the ICUs are identified, the control node of the first cell should also pre-allocate the uplink radio resource for the first mobile stations and may include two parts:
- Amount of resources: the estimation of required resource consumption of ICUs can be achieved by using statistics of the experienced traffic in the first cell. The simplest way is to use statistics of the PRB usage of all these ICUs, and then to allocate the corresponding percentage of uplink radio resource. For example, during the past measurement period if the PRB usage was 25 % in total for the first ICU mobile stations, then the control node can assign 1 out of 4 sub-frames for the ICUs;
- Resource position: when the amount of resources is determined it should be decided where to place the resources (many aspects can be considered), such as:
   ∘ Coordination of the resource allocation for other second cells within this first cell's coverage area;
   ∘ Coordination of the resource allocation among other first cells;
   ∘ ICU traffic Quality of Service (QoS) requirements.

When the ICU resource amount and position have been determined, the first radio resource allocation pattern is formed. Thereafter, the first cell should inform about this uplink resource allocation pattern to the corresponding second cell, and at the same time the resource allocation in the first cell should be in line with the pattern. A basic requirement for the scheduling of the resources of the first cell could be: the ICUs can only be scheduled in the allocated high interference sub-frames in the pattern which is informed to the second cell, and the non-ICUs can only be scheduled in the low interference sub-frames in the pattern. This restriction ensures interference stability in the corresponding second cell.

The corresponding method steps in the second control node according to the invention are: receiving the first message comprising the first radio resource allocation pattern; and allocating uplink radio resources of the second cell for one or more second mobile stations based on the first radio resource allocation pattern.

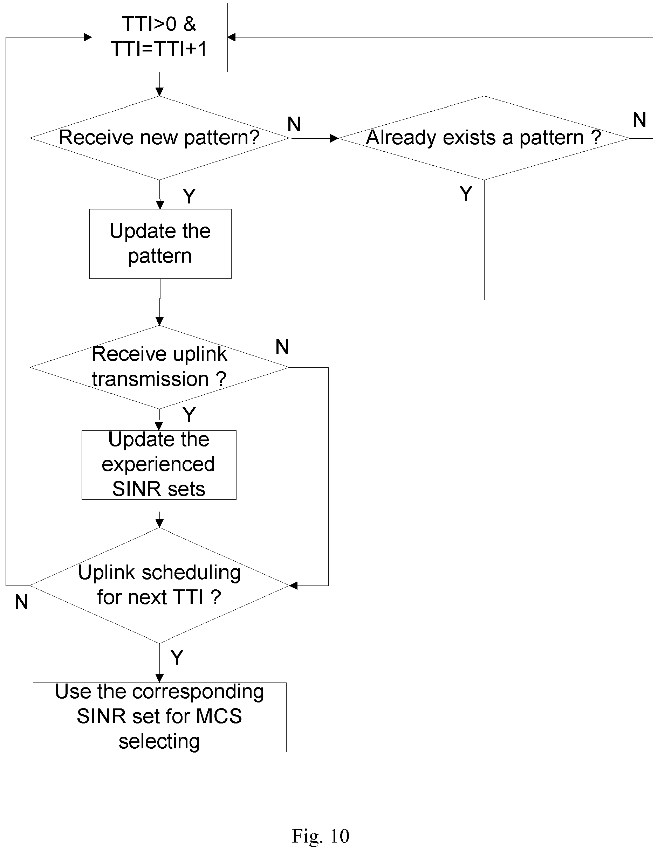

An embodiment of a method in the second control node is illustrated by the flow chart in figure 10, where for each TTI, if the second control node receives a first radio resource allocation pattern, updates any existing first radio resource allocation pattern stored about the first cell. If no new first radio resource allocation pattern is received in this TTI, but there exists an already received one, then the latest received first radio resource allocation pattern shall be used.

When the first uplink resource pattern has been received by the second control node two sets of SINR information for the future scheduling of second mobile stations may be maintained according to an embodiment. If it is a high interference sub-frame in the pattern, the SINR of this mobile station is grouped into high interference TTI SINR, and vice versa. Then when scheduling in the second cell for the coming TTI, the second cell shall know whether it will encounter high interference or not depends on the first uplink radio resource allocation pattern. The SINR information used for scheduling could be any of:
- Instant SINR of the last received sub-frame in the corresponding sub-frame type, for example the scheduling for TTI6 in figure 3 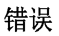 ! 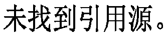 , if the TTI6 is high interference sub-frame the algorithm can use the mobile station SINR of TTI5 if that is the latest one. If the TTI is low interference sub-frame the algorithm can use the mobile station SINR of TTI4 if that is the latest one;
- Filtered SINR of the past intra type sub-frames, for example the scheduling for TTI 6 in figure 3, if the TTI6 is high interference sub-frame, the algorithm can use the mobile station SINR of the filtered one of TTI5 and TTI2 if the algorithm has this value. If the TTI is a low interference sub-frame, the algorithm can use the filtered mobile station SINR of TTI4, TTI3 and TTI1.

Hence, the predictable interference level in the coming TTI is known in the second cell and the second control node can therefore estimate the channel quality more accurately. Therefore, the present invention is based on an idea that it is essential to make use of uplink interference variation characteristics and boost small cell uplink capacity further. The inventors have realised that the interference problem in the uplink of second cells comes from the unpredictable behaviour of the interference from the interfering first cell(s). Since the interference in the second cell has large difference over time, the second cell should make use of this variation and adapt to it. This is achieved according to the present invention if the control node of the second cell knows the uplink resource allocation in the first cell and adapts its own uplink resource allocation based on the first radio resource allocation pattern.

The message comprising the first radio resource allocation pattern may be transmitted using a wired or wireless communication medium by means of a suitable communication protocol. Examples of communication media are: twisted copper, optical fibre, coaxial cables or radio transmission, and examples of communication protocols are Ethernet, ADSL, E1, T1, X2, or S1.

From the description of the HetNet networks previously it is noted that the first cell may be a macro cell whilst the second cell may be a small cell, such as a micro cell, pico cell or femto cell. Obviously, there is a significant difference in the maximum output power of the first cell compared to the small cell according to this embodiment. Typically, a maximum output power ratio between said first cell and said second cell is greater than 4 dB, and preferably greater than 6 dB. For example, the difference value for this ratio is 8 dB for macro/micro cells and 22 dB for macro/pico cells.

Moreover, the first control node may also have the responsibility to update the first uplink resource allocation pattern when the uplink interference situation changes. This updating can be based on changes in the traffic or user grouping statistic in the first cell. Also an update timer could be used to trigger an update of the first uplink resource pattern. Hence, according to yet another embodiment of the invention the first radio resource allocation pattern can be updated based on one or more parameters relating to any in the group comprising:
- Traffic load in the first cell, as mobile stations tend to use the air interface in an intermittent manner and not having a constant need for information, the load will vary over time and therefore will the need for resources for ICU and non-ICU also vary;
- Mobile station grouping statistics in the first cell, where the mobility of the users will change the number of ICUs over time and therefore change the need for resources defined for ICUs;
- One or more further radio resource allocation patterns associated with other first cells, where there are possible gains of aligning the pattern with other first cells to obtain a minimum interference variation in the second cells; and
- An update timer, to have a periodic update of the pattern.

In case the first control node decides it has to change the first radio resource allocation pattern, for example due to any of the listed reasons above, the first radio resource allocation pattern may be updated by the first control node transmitting a new first radio resource allocation pattern to the second control node over a wired or a wireless communication channel. The second control node can then receive this and change its radio resource allocation to the second mobile stations according to the new and updated pattern information.

In the above disclosure the focus has been on the scenario with one macro cell and one small cell in a one-to-one relation. In the following disclosure exemplary embodiments of one-to-many or many-to-one or many-to-many cases are considered when the first type of cell is a large cell and the second type of cell is a small cell.

There is the case when the cellular wireless communication system comprises two or more second cells. In this case the step of grouping may involve: grouping the one or more first mobile stations for each second cell, and the step of allocating involves allocating uplink radio resources of the first cell for each second cell so as to obtain a first radio resource allocation pattern for each second cell.

A further embodiment of the case above is when the cellular wireless communication system also comprises two or more first control nodes (many-to-one or many-to-many). In that case the present method according to an embodiment comprises the steps of transmitting a second message comprising the first radio resource allocation pattern from the first control node to another first control node which receives the second message. Finally, the first radio resource allocation pattern in the second message is used by the another first control node for adapting a second radio resource allocation pattern for uplink radio resources of the another first cell.

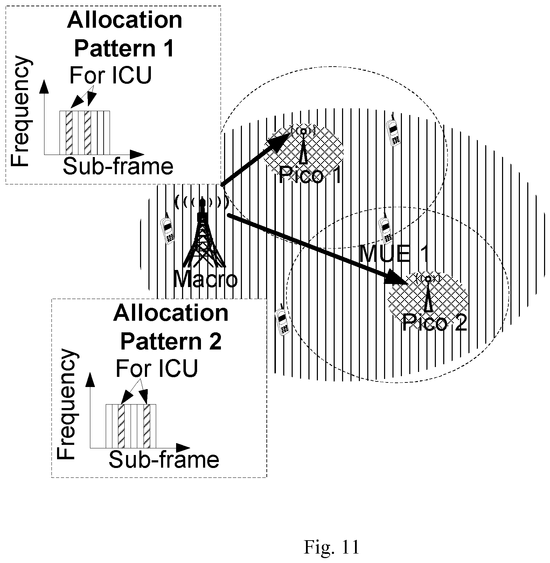

In most of cases, especially in the dense small cell scenario, the small cell coverage is very limited and the small cell number is much larger. It is a typical one-to-many scenario as shown in figure 11. In this case, the large cell could send different uplink allocation patterns to the individual small cells. Some general principles for the restriction of pattern forming in this case could be:
- If the ICUs have some common areas, for example MUE1 in the figure is ICU for both small cells. The two patterns are better to also have common resource to be used by those common ICUs;
- If the ICUs have no common areas, for example two small cells at the opposite sides and are far away, it is better to keep the resource in these two patterns different.

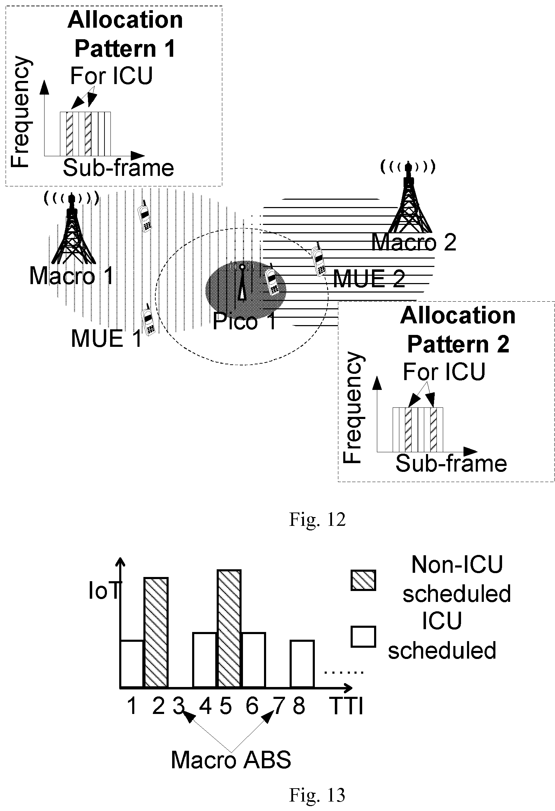

In some cases a small cell will be placed in the coverage area of more than one large cell, for example where the small cell is added for coverage as shown in figure 12. In this scenario there will be a conflict of interest between the performances of the large cell and the small cell. The mobile stations of the large cell in the different cells prefer not using the same pattern to avoid interference from mobile stations in the other large cells for performance, but the small cell preferably see the large cells using the same pattern from both large cells to minimize the high interference sub-frames for small cell performance. Some enhancements by adding the negotiation between the large cells can solve this problem, e.g. two large cells using the same pattern to this small cell.

### eICIC cases

When the large (first) macro cell uses ABS mechanism to protect the small cell control channel, there are two cases:
1. Case 1: No traffic was scheduled in ABS sub-frames in both downlink and uplink. Then the ABS sub-frames for the small cell is macro layer interference free (except some CRS and other minor interference in downlink);
2. Case 2: Low power ABS used, then those close to centre macro users who can survive from low signal strength on both control channel and data channel will still be scheduled. Typically those users have low path loss.

For case 1 above only the small cells close to the macro cell will be interfered by the large cell users in non-ABS sub-frames. These small cells should use the baseline mechanism, classifying the sub-frames into high and low interference, to coordinate the interference.

For the Case 1 and the small cells on the macro cell edge in Case 2, the difference to the baseline is there is no interference from the macro layer in the ABS sub-frames. Then the IoT in the small cells has the pattern as shown in figure 13. The allocation pattern includes three types of sub-frames: not interfered sub-frames, in macro ABS sub-frames; low interfered sub-frames, when non-ICU scheduled in macro; high interfered sub-frames, when ICU scheduled in macro.

Naturally when macro ABS is used, in most cases the small cells will use CRE to enlarge the cell coverage, in this case, the interference gap between low interfered sub-frames and high interfered sub-frames shrinks. However, it is still worthwhile to coordinate the interference from the large cells in non-ABS sub-frames for small cells.

Finally, three kinds of sub-frame types require three sets of SINR information maintained in the small cell:
- Channel quality in large cell ABS sub-frames;
- Channel quality in low interfered sub-frames;
- Channel quality in high interfered sub-frames.

In this scenario, when both *ABS pattern info* IE and *ICU schedule pattern* IE were received in the small cell, the small cell could group the small cell users into two groups, i.e.: cell centre users with good control channel quality in all sub-frames; and cell edge users with poor control channel quality in non-ABS sub-frames.

In the ABS sub-frames, every user can be scheduled, but the SINR information should select the "channel quality in macro ABS sub-frames". In non-ABS sub-frames, only the cell centre users can be scheduled, when the coming TTI is high interfered TTI indicated by *ICU schedule pattern* IE, the small cell shall select the "Channel quality in high interfered sub-frames" and if it is the low interfered sub-frame then "Channel quality in low interfered sub-frames" should be selected.

### CA cases

In order to avoid the high interference from large (macro) cells to small cells on the control channel, the CA technique gives more flexibility to the resource allocation for both control and data channel. By extending the LOAD INFORMATION message over the X2 interface with more information on both channels in multi carriers, and with another enabler of cross carrier scheduler, it allows the coordination of data channel and control channel separately.

And when the macro PDCCH and pico PDCCH are separately concentrated in different carriers, the small cell user can have good enough PDCCH quality even in CRE environment. For the uplink CA-based ICIC in HetNet, a proposed solution also used the "ICU identifying" to find the ICUs to the small cell. And the solution is a frequency domain coordination based way and it restricts the ICU resource on some specific carrier and make the interference from the large cells to the small cells be stable over the frequency domain. This approach is still far away from perfect because: the coordination is done on carrier level; the purpose is still limited in the small cell poor user improving, which is not the bottleneck of the interference problem (no "small cell capacity boosting" considered); in the future the small cell could be even smaller, and the ICU number to it is limited, within the ICU carrier (high interference carrier) there is also big interference varying in TTI to the small cell.

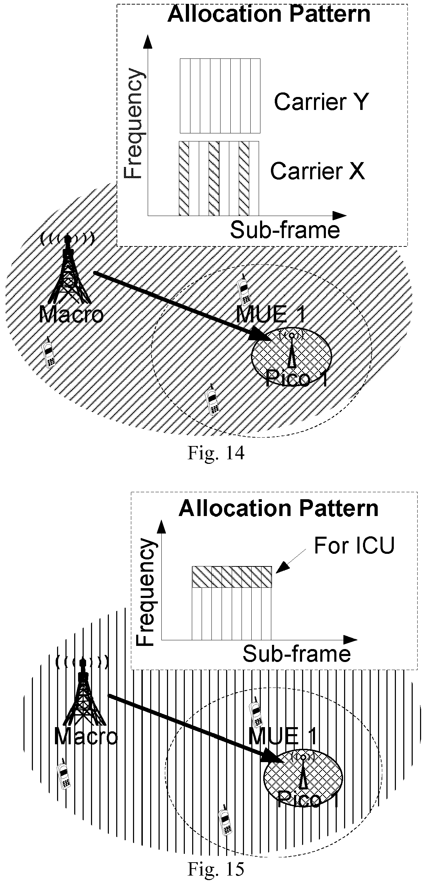

Fortunately, the present solution is still useful in this scenario and can further improve the CA-ICIC efficiency. When multiple carriers are used, as shown in figure 14, it gives more flexibility for the resource grouping in the macro layer and more interference patterns can be formed.

### The present invention in TDD systems

In TDD systems, the uplink and downlink resource can be shared. The MUE may use the resource which is used as the small cell downlink as the large cell uplink resource. Then the MUE at different distance to the small cell will cause different level of interference to the small cell mobile station in the downlink. In this case, the large cell can still use this solution to restrict the MUE scheduling character and form the interference pattern to the small cell.

The method in the first macro cell side and the information exchange are the same as with the baseline process. The difference is the method in the small cell which makes use of the first allocation pattern also for its downlink scheduling. In this case, before the present solution can be used for the coordination of the macro cell and the small cell, the macro cell and the small cell need to exchange the allocation of spectrum in the uplink and downlink.

Furthermore, as understood by the person skilled in the art, any method according to the present invention may also be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, the present invention also relates to a first control node device and a second control node device corresponding to the respective methods in the first and second control nodes. The control devices each comprise suitable means for controlling one or more cells each. For example the device may include transmitting means, receiving means, processing means, connection means, memory means, interface means, input means, output means, etc.

The first control node device further comprises: means for grouping the one or more first mobile stations into at least two different groups depending on an interference impact of a first mobile station on the second cell; allocation means arranged for allocating uplink radio resources of the first cell for the one or more first mobile stations based on the grouping so as to obtain a first radio resource allocation pattern for the one or more first mobile stations; and transmitting means arranged for transmitting a first message comprising the first radio resource allocation pattern.

The second control node device further comprises: receiving means arranged for receiving a message comprising a first radio resource allocation pattern relating to an allocation of uplink radio resources of a first cell; and allocating means arranged for allocating uplink radio resources of the second cell for one or more second mobile stations based on the first radio resource allocation pattern.

Finally, it should be understood that the present invention is not limited to the embodiments described above, but also relates to and incorporates all embodiments within the scope of the appended independent claims.

## Claims

1. Method for uplink radio resource allocation in a cellular wireless communication system, said cellular wireless communication system comprising:
a first cell associated with a first control node and one or more first mobile stations served by said first cell, and
an additional first cell associated with an additional first control node, and
a second cell associated with a second control node and one or more second mobile stations served by said second cell, and
said method being **characterized by** comprising the steps of:
grouping, by said first control node, said first mobile stations into at least two different groups by performing, for each of said first one or more mobile stations, the step of classifying said first mobile station in one of said groups depending on an interference impact of said first mobile station on said second cell,
wherein the interference impact is based on one or more parameters comprising:
- a relation between downlink reception power at said first mobile station from said first cell and downlink reception power at said first mobile station from said second cell;
- an uplink reception power from said first mobile station as measured in said first cell and/or in said second cell; and
- a spatial position of said first mobile station;
wherein the method further comprises:
forming, by said first control node, a first radio resource allocation pattern for said first cell by determining, for each of said groups, a set of one or more radio resources in which the first mobile stations of said group are allowed to transmit in the uplink and in which the first mobile stations of the groups other than said group are not allowed to transmit in the uplink; and
adapting, by said first control node, said first radio resource allocation pattern by using a radio resource allocation pattern for said additional first cell, said used radio resource allocation pattern being received in a message from said additional first control node, and
allocating, by said first control node, uplink radio resources of said first cell for said one or more first mobile stations based on said adapted first radio resource allocation pattern for said one or more first mobile stations;
transmitting, by said first control node, a first message to said second control node, said first message comprising said adapted first radio resource allocation pattern.

2. The method of claim 1, further comprising:
receiving, by said second control node, said first message comprising said adapted first radio resource allocation pattern; and
allocating, by said second control node, uplink radio resources of said second cell for one or more second mobile stations based on said adapted first radio resource allocation pattern.

3. Method according to claim 1, wherein said first cell is a macro cell, said additional first cell is a macro cell and said second cell is a small cell, such as a micro cell, pico cell or femto cell.

4. Method according to claim 1, wherein said first radio resource allocation pattern is a time/frequency radio resource pattern.

5. Method according to claim 4, wherein said uplink radio resources of said first cell are allocated using at least one threshold value such that said groups comprise at least a first group of mobile stations causing high interference in said second cell and a second group of mobile stations causing low interference in said second cell, and such that said first radio resource allocation pattern comprises at least two groups of uplink radio resources, a first group of uplink radio resources with high interference from said one or more first mobile stations in said second cell and a second group of uplink radio resources with low interference from said one or more first mobile stations in said second cell.

6. Method according to claim 1, wherein said first radio resource allocation pattern is updated based on one or more parameters comprising: traffic load in said first cell, mobile station grouping statistics in said first cell, one or more further radio resource allocation patterns being associated with other additional first cells and being received from other additional first control nodes respectively, and an update timer.

7. Method according to claim 1, wherein said cellular wireless communication system comprises one or more additional second cells associated to one or more additional second control nodes respectively, and
wherein the method further comprises performing, by the first control node, the steps of claim 1 for each additional second cell..

8. Method according to claim 6, wherein said cellular wireless communication system comprises another additional first control node, and said method further comprises the steps of:
transmitting, by said first control node, a second message to said another additional first control node, said second message comprising said first adapted radio resource allocation pattern.

9. The method of claim 8, further comprising:
receiving, by said another additional first control node associated with another additional first cell, said second message comprising said adapted first radio resource allocation pattern, and
using, by said another additional first control node, said adapted first radio resource allocation pattern for adapting a second radio resource allocation pattern for uplink radio resources of said another additional first cell.

10. Computer program, comprising code means, which when run by processing means within a first control node causes said processing means to execute said method according to any of claims 1 and 3 to 8.

11. Computer program product comprising a computer readable medium and a computer program according to claim 10, wherein said computer program is included in the computer readable medium, and comprises of one or more from the group: ROM Read-Only Memory, PROM Programmable ROM, EPROM Erasable PROM, Flash memory, EEPROM Electrically EPROM and hard disk drive.

12. A device within a first control node, said device comprising means adapted to perform the method according to any of claims 1 and 3 to 8.

## Patentansprüche

1. Verfahren zur Uplink-Funkressourcenzuordnung in einem drahtlosen Mobilfunkkommunikationssystem, das drahtlose Mobilfunkkommunikationssystem umfassend:
eine erste Zelle, die mit einem ersten Steuerknoten verbunden ist, und eine oder mehrere erste mobile Stationen, die durch die erste Zelle bedient werden, und
eine zusätzliche erste Zelle, die mit einem zusätzlichen ersten Steuerknoten verbunden ist, und
eine zweite Zelle, die mit einem zweiten Steuerknoten verbunden ist, und eine oder mehrere zweite mobile Stationen, die durch die zweite Zelle bedient werden, und
wobei das Verfahren durch das Umfassen der folgenden Schritte gekennzeichnet ist:
Gruppieren, durch den ersten Steuerknoten, der ersten mobilen Stationen in zumindest zwei verschiedene Gruppen durch ein Durchführen, für alle der einen oder der mehreren ersten mobilen Stationen, des Schritts des Klassifizierens der ersten mobilen Station in eine der Gruppen je nach einer Interferenzwirkung der ersten mobilen Station auf die zweite Zelle,
wobei die Interferenzwirkung auf einem oder mehreren Parametern basiert, umfassend:
- eine Beziehung zwischen einer Downlink-Empfangsleistung an der ersten mobilen Station von der ersten Zelle und einer Downlink-Empfangsleistung an der ersten mobilen Station von der zweiten Zelle;
- eine Uplink-Empfangsleistung von der ersten mobilen Station, wie in der ersten Zelle und/oder in der zweiten Zelle gemessen; und
- eine räumliche Position der ersten mobilen Station;
wobei das Verfahren ferner Folgendes umfasst:
Bilden, durch den ersten Steuerknoten, eines ersten Funkressourcenzuordnungsmusters für die erste Zelle durch ein Bestimmen, für alle der Gruppen, eines Satzes von einer oder mehreren Funkressourcen, in dem es den ersten mobilen Stationen der Gruppe erlaubt ist, im Uplink zu übertragen, und in dem es den ersten mobilen Stationen der Gruppen außer der Gruppe nicht erlaubt ist, im Uplink zu übertragen; und
Anpassen, durch den ersten Steuerknoten, des ersten Funkressourcenzuordnungsmusters durch ein Verwenden eines Funkressourcenzuordnungsmusters für die zusätzliche erste Zelle, wobei das verwendete Funkressourcenzuordnungsmuster in einer Nachricht von dem zusätzlichen ersten Steuerknoten empfangen wird, und
Zuordnen, durch den ersten Steuerknoten, von Uplink-Funkressourcen der ersten Zelle für die eine oder die mehreren ersten mobilen Stationen basierend auf dem angepassten ersten Funkressourcenzuordnungsmuster für die eine oder die mehreren ersten mobilen Stationen;
Übertragen, durch den ersten Steuerknoten, einer ersten Nachricht zu dem zweiten Steuerknoten, wobei die erste Nachricht das angepasste erste Funkressourcenzuordnungsmuster umfasst.

2. Verfahren nach Anspruch 1, ferner umfassend:
Empfangen, durch den zweiten Steuerknoten, der ersten Nachricht mit dem angepassten ersten Funkressourcenzuordnungsmuster; und
Zuordnen, durch den zweiten Steuerknoten, von Uplink-Funkressourcen der zweiten Zelle für eine oder mehrere zweite mobile Stationen basierend auf dem angepassten ersten Funkressourcenzuordnungsmuster.

3. Verfahren nach Anspruch 1, wobei die erste Zelle eine Makrozelle ist, die zusätzliche erste Zelle eine Makrozelle ist und die zweite Zelle eine "Small Cell", wie eine Mikrozelle, Picozelle oder Femtozelle, ist.

4. Verfahren nach Anspruch 1, wobei das erste Funkressourcenzuordnungsmuster ein Zeit/Frequenz-Funkressourcenmuster ist.

5. Verfahren nach Anspruch 4, wobei die Uplink-Funkressourcen der ersten Zelle unter Verwendung von zumindest einem Schwellwert derart zugeordnet werden, dass die Gruppen zumindest eine erste Gruppe von mobilen Stationen, die hohe Interferenzen in der zweiten Zelle verursachen, und eine zweite Gruppe von mobilen Stationen, die niedrige Interferenzen in der zweiten Zelle verursachen, umfassen, und derart, dass das erste Funkressourcenzuordnungsmuster zumindest zwei Gruppen von Uplink-Funkressourcen, eine erste Gruppe von Uplink-Funkressourcen mit hohen Interferenzen von der einen oder den mehreren ersten mobilen Stationen in der zweiten Zelle und eine zweite Gruppe von Uplink-Funkressourcen mit niedrigen Interferenzen von der einen oder den mehreren ersten mobilen Stationen in der zweiten Zelle, umfasst.

6. Verfahren nach Anspruch 1, wobei das erste Funkressourcenzuordnungsmuster basierend auf einem oder mehreren Parametern aktualisiert wird, umfassend: Verkehrslast in der ersten Zelle, Statistiken zum Gruppieren von mobilen Stationen in der ersten Zelle, ein oder mehrere weitere Funkressourcenzuordnungsmuster, die jeweils mit anderen zusätzlichen ersten Zellen verbunden sind und von anderen zusätzlichen ersten Steuerknoten empfangen werden, und einen Aktualisierungszeitgeber.

7. Verfahren nach Anspruch 1, wobei das drahtlose Mobilfunkkommunikationssystem eine oder mehrere zusätzliche zweite Zellen umfasst, die jeweils mit einem oder mehreren zusätzlichen zweiten Steuerknoten verbunden sind, und
wobei das Verfahren ferner ein Durchführen, durch den ersten Steuerknoten, der Schritte von Anspruch 1 für jede zusätzliche zweite Zelle umfasst.

8. Verfahren nach Anspruch 6, wobei das drahtlose Mobilfunkkommunikationssystem einen anderen zusätzlichen ersten Steuerknoten umfasst und das Verfahren ferner die folgenden Schritte umfasst:
Übertragen, durch den ersten Steuerknoten, einer zweiten Nachricht zu dem einen anderen zusätzlichen ersten Steuerknoten, die zweite Nachricht umfassend das erste angepasste Funkressourcenzuordnungsmuster.

9. Verfahren nach Anspruch 8, ferner umfassend:
Empfangen, durch den einen anderen zusätzlichen ersten Steuerknoten, der mit einer anderen zusätzlichen ersten Zelle verbunden ist, der zweiten Nachricht mit dem angepassten ersten Funkressourcenzuordnungsmuster, und
Verwenden, durch den einen anderen zusätzlichen ersten Steuerknoten, des angepassten ersten Funkressourcenzuordnungsmusters zum Anpassen eines zweiten Funkressourcenzuordnungsmusters für Uplink-Funkressourcen der einen anderen zusätzlichen ersten Zelle.

10. Computerprogramm, umfassend ein Codemittel, das bei Ausführung durch ein Verarbeitungsmittel in einem ersten Steuerknoten das Verarbeitungsmittel dazu veranlasst, das Verfahren nach einem der Ansprüche 1 und 3 bis 8 auszuführen.

11. Computerprogrammprodukt, umfassend ein computerlesbares Medium und ein Computerprogramm nach Anspruch 10, wobei das Computerprogramm in dem computerlesbaren Medium enthalten ist und eines oder mehreres aus der folgenden Gruppe umfasst: ROM (Read-Only Memory, Festwertspeicher), PROM (programmierbarer ROM), EPROM (löschbarer PROM), Flash-Speicher, EEPROM (elektrisch EPROM) und Festplattenlaufwerk.

12. Vorrichtung in einem ersten Steuerknoten, die Vorrichtung umfassend ein Mittel, das dazu konzipiert ist, das Verfahren nach einem der Ansprüche 1 und 3 bis 8 durchzuführen.

## Revendications

1. Procédé pour l'attribution de ressources radio de liaison montante dans un système de communication sans fil cellulaire, ce système de communication sans fil cellulaire comprenant :
une première cellule associée à un premier noeud de commande et à une ou plusieurs premières stations mobiles desservies par ladite première cellule, et
une première cellule supplémentaire associée à un premier noeud de commande supplémentaire, et
une deuxième cellule associée à un deuxième noeud de commande et à une ou plusieurs deuxièmes stations mobiles desservies par ladite deuxième cellule, et
ledit procédé étant **caractérisé en ce qu'**il comprend les étapes consistant à :
regrouper, au moyen dudit premier noeud de commande, lesdites premières stations mobiles en au moins deux groupes différents en exécutant, pour chacune desdites une ou plusieurs premières stations mobiles, l'étape de classification de ladite première station mobile dans un desdits groupes selon un impact d'interférence de ladite première station mobile sur ladite deuxième cellule,
cet impact d'interférence étant basé sur un ou plusieurs paramètres comprenant :
- un rapport entre la puissance de réception de liaison descendante au niveau de ladite première station mobile en provenance de ladite première cellule et la puissance de réception de liaison descendante au niveau de ladite première station mobile en provenance de ladite deuxième cellule ;
- une puissance de réception de liaison montante en provenance de ladite première station mobile telle que mesurée dans ladite première cellule et/ou dans ladite deuxième cellule ; et
- une position spatiale de ladite première station mobile ;
ce procédé comprenant en outre :
la formation, par ledit premier noeud de commande, d'un premier modèle d'attribution de ressources radio pour ladite première cellule en déterminant, pour chacun desdits groupes, un ensemble d'une ou de plusieurs ressources radio dans lesquelles les premières stations mobiles du dit groupe sont autorisées à transmettre dans la liaison montante et dans lesquelles les premières stations mobiles des groupes autres que ledit groupe ne sont pas autorisées à transmettre dans la liaison montante ; et
l'adaptation, par ledit premier noeud de commande, dudit premier modèle d'attribution de ressources radio en utilisant un modèle d'attribution de ressources radio pour ladite première cellule supplémentaire, ledit modèle d'attribution de ressources radio utilisé étant reçu dans un message provenant dudit premier noeud de commande supplémentaire, et
l'attribution, par ledit premier noeud de commande, de ressources radio de liaison montante de ladite première cellule pour lesdites une ou plusieurs premières stations mobiles en se basant sur ledit premier modèle d'attribution de ressources radio adapté pour lesdites une ou plusieurs premières stations mobiles ;
la transmission, par ledit premier noeud de commande, d'un premier message audit deuxième noeud de commande, ledit premier message comprenant ledit premier modèle d'attribution de ressources radio adapté.

2. Procédé selon la revendication 1, comprenant en outre :
la réception, par ledit deuxième noeud de commande, dudit premier message comprenant ledit premier modèle d'attribution de ressources radio adapté ; et
l'attribution, par ledit deuxième noeud de commande, de ressources radio de liaison montante de ladite deuxième cellule pour lesdites une ou plusieurs deuxièmes stations mobiles en se basant sur ledit premier modèle d'attribution de ressources radio adapté.

3. Procédé selon la revendication 1, dans lequel ladite première cellule est une macrocellule, ladite première cellule supplémentaire est une macrocellule et ladite deuxième cellule est une petite cellule telle qu'une microcellule, une picocellule ou une femtocellule.

4. Procédé selon la revendication 1, dans lequel ledit premier modèle d'attribution de ressources radio est un modèle d'attribution de ressources radio temporelles/fréquentielles.

5. Procédé selon la revendication 4, dans lequel lesdites ressources radio de liaison montante de ladite première cellule sont attribuées en utilisant au moins une valeur de seuil telle que lesdits groupes comprennent au moins un premier groupe de stations mobiles causant une forte interférence dans ladite deuxième cellule et un deuxième groupe de stations mobiles causant une faible interférence dans ladite deuxième cellule, et telle que ledit premier modèle d'attribution de ressources radio comprend au moins deux groupes de ressources radio de liaison montante, un premier groupe de ressources radio de liaison montante avec une forte interférence provenant desdites une ou plusieurs premières stations mobiles dans ladite deuxième cellule et un deuxième groupe de ressources radio de liaison montante avec une faible interférence provenant desdites une ou plusieurs premières stations mobiles dans ladite deuxième cellule.

6. Procédé selon la revendication 1, dans lequel ledit premier modèle d'attribution de ressources radio est mis à jour en se basant sur un ou plusieurs paramètres comprenant : le volume de trafic dans ladite première cellule, les statistiques de regroupement de stations mobiles dans ladite première cellule, un ou plusieurs autres modèles d'attribution de ressources radio étant associés à d'autres premières cellules supplémentaires et étant reçus en provenance d'autres premiers noeuds de commande supplémentaires respectivement, et un temporisateur de mise à jour.

7. Procédé selon la revendication 1, dans lequel ledit système de communication sans fil cellulaire comprend une ou plusieurs deuxièmes cellules associées à un ou plusieurs deuxièmes noeuds de commande supplémentaires respectivement, et
ce procédé comprenant en outre l'exécution, par le premier noeud de commande, des étapes de la revendication 1 pour chaque deuxième cellule supplémentaire.

8. Procédé selon la revendication 6, dans lequel ledit système de communication sans fil cellulaire comprend un autre premier noeud de commande supplémentaire, et ce procédé comprenant en outre les étapes consistant à :
transmettre, au moyen dudit premier noeud de commande, un deuxième message audit autre premier noeud de commande supplémentaire, ledit deuxième message comprenant ledit premier modèle d'attribution de ressources radio adapté.

9. Procédé selon la revendication 8, comprenant en outre :
la réception, par ledit autre premier noeud de commande associé à une autre première cellule supplémentaire, dudit deuxième message comprenant ledit premier modèle d'attribution de ressources radio adapté, et
l'utilisation, par ledit autre premier noeud de commande supplémentaire, dudit premier modèle d'attribution de ressources radio adapté pour adapter un deuxième modèle d'attribution de ressources radio pour des ressources radio de liaison montante de ladite autre première cellule supplémentaire.

10. Programme informatique, comprenant un moyen de code qui, lorsqu'il est exécuté par un moyen de traitement au sein d'un premier noeud de commande, fait exécuter à ce moyen de traitement ledit procédé selon l'une quelconque des revendications 1 et 3 à 8.

11. Produit programme informatique comprenant un support lisible par ordinateur et un programme informatique selon la revendication 10, ledit programme informatique étant inclus dans le support lisible par ordinateur, et comprenant un ou plusieurs des éléments du groupe suivant : mémoire morte ROM, mémoire morte programmable PROM, mémoire morte effaçable et programmable EPROM, mémoire flash, mémoire morte effaçable et programmable électriquement EEPROM et lecteur de disque dur.

12. Dispositif au sein d'un premier noeud de commande, ledit dispositif comprenant des moyens adaptés pour exécuter le procédé selon l'une quelconque des revendications 1 et 3 à 8.
